# FASCICULE DE BREVET EUROPEEN

(11) **EP 1 428 421 B1**
(45) Date de publication et mention de la délivrance du brevet: **30.12.2009**
(21) Numéro de dépôt: 03292831.9
(22) Date de dépôt: 14.11.2003
(51) Int. Cl.: A01D 19/16

(54) **Dispositif auxiliaire pour la récolte de betteraves ou autres tubercules**
Aufsatzgerät für das Ernten von Zuckerrüben oder anderen Wurzelfrüchten
Auxiliary device for sugar beet or any other root crop harvesting

(30) Priorité: 15.11.2002 FR 0214355
(43) Date de publication de la demande: 16.06.2004
(73) Titulaire: EXEL INDUSTRIES, 51200 Epernay (FR)
(72) Inventeur: Ballu, Patrick, 51100 Reims (FR)
(74) Mandataire: Kaspar, Jean-Georges

(56) Documents cités:
- EP-A- 0 678 234
- EP-A- 1 078 565
- EP-A- 1 086 618
- DE-B- 1 005 778
- DE-U- 9 213 844
- FR-E- 86 787

## Description

L'invention est relative à un dispositif auxiliaire pour la récolte de betteraves ou autres tubercules.

L'invention est également relative à une arracheuse-chargeuse de betteraves ou autres tubercules comportant un dispositif selon l'invention.

L'invention est enfin relative à une nettoyeuse-déterreuse de betteraves ou autres tubercules comportant un dispositif selon l'invention.

Le document EP 0.650.662 B1 décrit une arracheuse-chargeuse automotrice de betteraves ou autres tubercules, comportant des organes d'effeuillage, des organes d'arrachage, des organes de reprise du genre turbine assurant par leur rotation le nettoyage et le convoyage des betteraves vers l'arrière, ainsi qu'un tapis transporteur et une trémie de grande capacité.

Dans les machines du genre décrit dans le document EP 0.650.662 B1, le nettoyage des betteraves ou autres tubercules est assuré par des turbines de nettoyage entraînées en rotation autour d'un axe sensiblement vertical. Ces turbines de nettoyage à axe vertical sont bordées latéralement par des grilles ou des ressorts solidaires du bâti de la machine.

Le document EP 1 086 618 A1 décrit un dispositif pour diminuer la tare-terre de produits agricoles, notamment de betteraves, équipant une machine de récolte de produits agricoles.

Cette machine comprend : un support de transport sur lequel les produits et la terre sont alimentés et au moins un élément rotatif dont l'axe de rotation est perpendiculaire au support.

Cet élément rotatif est disposé au-dessus du support en sorte d'être sur le trajet des produits et de la terre lorsque ceux-ci se déplacent sur ledit support.

L'élément rotatif est un élément rotatif de projection animé d'une vitesse de rotation d'au moins 300 tours par minute, dont l'axe de rotation est à proximité de la périphérie extérieure du support mobile.

Le dispositif du document EP 1 086 618 A1 permet ainsi de projeter le produit ou la betterave se déplaçant sur le support vers la zone médiane du support, en déviant le produit ou la betterave de son trajet naturel. L'impact sur le produit ou la betterave en circulation a pour effet de détacher au moins une partie de la terre, en remettant le produit ou la betterave en circulation sur la zone médiane du support.

L'effet des éléments rotatifs de projection ou moulinets déterreurs du document EP 1 086 618 A1 résulte de leur vitesse élevée de rotation comprise entre 300 et 1000 tours par minute.

Par rapport aux tambours débourreurs à surface extérieure pleine, de type connu, le déterrage obtenu grâce au dispositif du document EP 1 086 618 A1 est amélioré, au prix de chocs et de projections importantes sur les produits ou betteraves à déterrer.

Cependant, les conditions de récolte dépendent, même dans le cas de turbines de nettoyage équipées de dispositifs selon le document EP 1 086 168 A1, de la condition des terrains et de la terre attachée aux produits ou betteraves en circulation.

En conditions humides, ces turbines de nettoyage assurent le nettoyage ou le décrottage du flux de betteraves ou autres tubercules, à condition d'effectuer un réglage en position et en écartement des grilles de retenue périphériques pour permettre une bonne évacuation de la terre ou des impuretés. Lorsque le réglage n'est pas satisfaisant, la quantité de terre adhérant aux betteraves reste importante et pénalise la valorisation des betteraves ou tubercules livrées en usine ou en sucrerie.

En conditions sèches, le nettoyage ou le décrottage du flux de betteraves est facilité, de sorte que l'efficacité de la récolte est liée à la vitesse de circulation du flux de betteraves à l'intérieur de la machine de récolte et la productivité de la machine de récolte est limitée en conséquence par cette vitesse de circulation du flux de betteraves à l'intérieur de la machine de récolte.

Un but de l'invention est de remédier aux inconvénients de la technique connue, en facilitant la récolte de betteraves en conditions sèches et en améliorant le nettoyage des betteraves en conditions humides.

Un autre but de l'invention est de fournir un moyen destiné à équiper notamment une arracheuse-chargeuse de betteraves ou autres tubercules pour améliorer la productivité et la propreté de la récolte.

L'invention a pour objet un dispositif auxiliaire pour la récolte de betteraves ou autres tubercules, tel que décrit dans la revendication 1. Selon d'autres caractéristiques alternatives de l'invention :
- le dispositif est associé à des moyens de commande de la rotation de chaque organe rotatif, de manière à commander l'entraînement en rotation dans un premier sens pour accélérer et nettoyer le flux de betteraves ou autres tubercules et de manière à commander l'entraînement en rotation en sens contraire du dit premier sens pour épurer, nettoyer et décrotter le flux de betteraves ou autres tubercules.
- ces moyens de commande de la rotation comportent avantageusement des moyens de variation de vitesse de rotation.
- le dispositif peut comporter une pluralité d'organes rotatifs entraînés simultanément en rotation, dans ledit premier sens de rotation, ou en sens contraire audit premier sens de rotation.
- le dispositif peut comporter une pluralité d'organes rotatifs, dans laquelle certains organes rotatifs sont entraînés en sens contraire au sens de rotation des autres organes rotatifs, de manière à assurer à la fois une accélération du flux de betteraves ou autres tubercules, et une épuration, un nettoyage ou un décrottage des betteraves ou autres tubercules.
- les moyens d'entraînement en rotation sont des moyens mécaniques disposés extérieurement au flux de betteraves ou autres tubercules.
- le dispositif comporte un moteur hydraulique d'entraînement, destiné à être alimenté et commandé par une source de puissance hydraulique de l'arracheuse-chargeuse de betteraves ou autres tubercules à laquelle le dispositif est destiné.

L'invention a également pour objet une arracheuse-chargeuse de betteraves ou autres tubercules comportant un dispositif selon l'invention.

L'invention a enfin pour objet une nettoyeuse-déterreuse de betteraves ou autres tubercules comportant un dispositif selon l'invention.

L'invention sera mieux comprise grâce à la description qui va suivre donnée à titre d'exemple non limitatif en référence aux dessins annexés dans lesquels :
- La figure 1 représente schématiquement et partiellement une vue de dessus d'une arracheuse-chargeuse, selon l'invention équipée d'un dispositif selon l'invention.
- La figure 2 représente schématiquement une vue en perspective partielle agrandie d'une turbine de nettoyage équipée d'un dispositif selon l'invention.
- La figure 3 représente schématiquement une vue de dessus d'un dispositif selon l'invention.

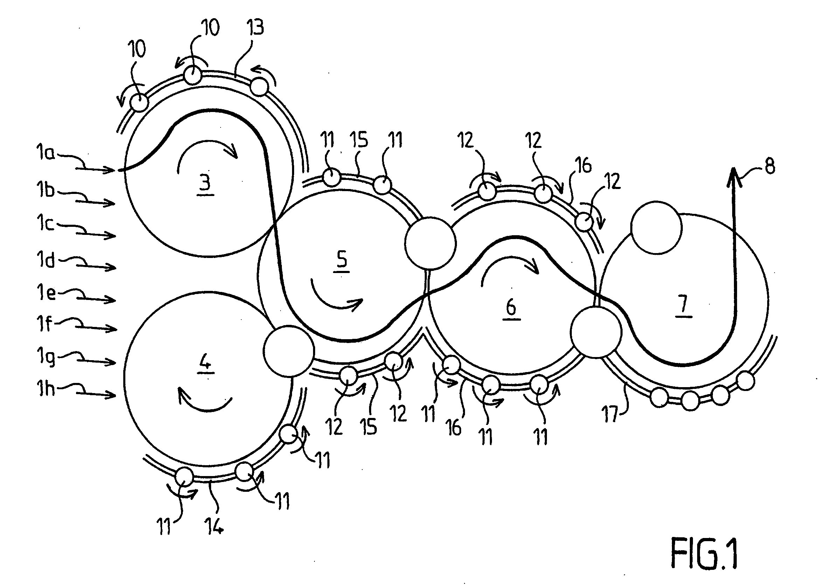

En référence aux figures 1 à 3, les éléments identiques ou fonctionnellement équivalents sont repérés par des chiffres de références identiques.

Sur la figure 1, un flux de betteraves arrivant dans le sens des flèches 1a, 1b, 1c, 1d, 1e, 1f, 1g et 1h est relevé et chargé par des moyens appropriés sur des turbines de reprise 3, 4, 5 , 6 et 7.

Chaque turbine 3 à 7 est entraînée en rotation autour d'un axe central sensiblement vertical, de sorte que le flux de betteraves arrivant par exemple par la flèche la suit un trajet sur les turbines 3, 5, 6 et 7 pour ressortir par la flèche 8 et être transportée jusqu'à une trémie de réception non représentée.

De manière analogue, l'ensemble des lignes arrivantes de betteraves schématisées par les flèches 1b à 1h pénètrent sur les turbines de nettoyage 3 à 7 pour être transportées vers la trémie de réception non représentée.

Au cours de leur trajet en périphérie des turbines 3 à 7, les betteraves ou autres tubercules sont déplacées par des dents, ou par des rouleaux en restant retenues latéralement par des grilles 13,14,15,16 et 17.

Chaque grille 13 à 17 est équipée d'un dispositif selon l'invention, sensiblement en forme de secteur cylindrique et comportant des organes rotatifs 10, 11, ou 12.

Certains organes rotatifs sont entraînés dans le même sens d'entraînement du flux de betteraves que les turbines qu'elles bordent : par exemple, les organes rotatifs 11 et les organes rotatifs 10 tournent dans le même sens d'entraînement du flux de betteraves que les turbines 3 et 4, tandis que les organes rotatifs 12 tournent en sens contraire des turbines 5 et 6.

Lorsque des organes rotatifs 10 ou 11 tournent dans le même sens d'entraînement du flux de betteraves que la turbine 3, 4 ou 6 associée, ces organes rotatifs 10 ou 11 accélèrent le flux de betteraves en circulation sur la turbine 3, 4 ou 6 correspondante.

Lorsque des organes rotatifs 12 tournent en sens contraire d'entraînement du flux de betteraves de la turbine 5 ou 6 associée, ces organes rotatifs 12 ralentissent le flux de betteraves tout en exerçant une action d'épuration, de nettoyage ou de décrottage du flux de betteraves, de manière à éliminer la terre adhérant aux betteraves.

Les organes de commande rotatifs sont avantageusement associés et entraînés par des moyens de commande de la rotation, de manière à entraîner simultanément en rotation une pluralité d'organes rotatifs.

Selon une variante non représentée, le dispositif selon l'invention peut comporter une pluralité d'organes rotatifs, dans laquelle certains organes rotatifs sont entraînés en sens contraire au sens de rotation de certains autres organes rotatifs : cette variante de l'invention assure à la fois, en des emplacements distincts, une accélération locale du flux de betteraves ou autres tubercules et un nettoyage local des betteraves ou autres tubercules.

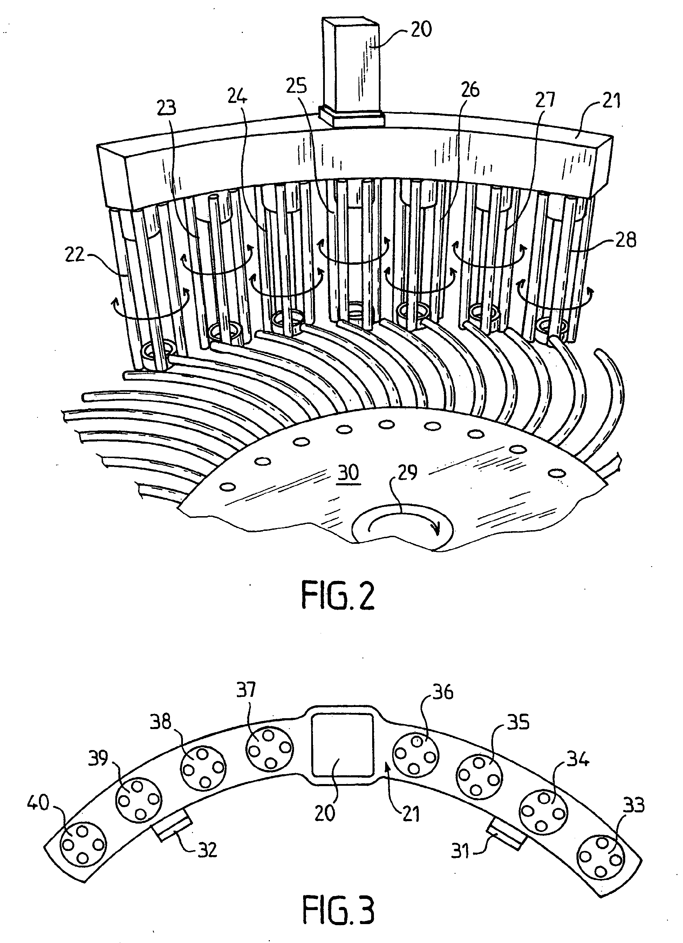

Sur la figure 2, le dispositif selon l'invention présente une conformation sensiblement en secteur cylindrique et comporte un moteur rotatif 20, de préférence un moteur hydraulique d'entraînement.

Le moteur hydraulique 20 d'entraînement est alimenté et commandé par une source et un moyen non représentés de commande hydraulique de l'arracheuse-chargeuse de betteraves.

Le moteur hydraulique 20 entraîne un train d'engrenages disposés dans un carter 21.

Les engrenages contenus dans le carter 21 sont reliés à des arbres de plusieurs cages 22, 23, 24, 25, 26, 27 et 28 à barreaux sensiblement verticaux.

Chaque cage 22 à 28 est ainsi entraînée en rotation et vient au contact du flux de betteraves par ses barreaux sensiblement verticaux, en exerçant une action tangentielle d'accélération lorsque la cage tourne dans le sens de circulation du flux de betteraves correspondant au sens de rotation 29 de la turbine 30 de reprise de betteraves ; ou en exerçant au contraire une action de nettoyage et de ralentissement lorsque la cage tourne en sens de rotation contraire au sens de circulation du flux de betteraves.

Sur la figure 3, le montage d'un dispositif en forme de secteur cylindrique sur une arracheuse-chargeuse de betteraves de type connu s'effectue à l'aide de pattes ou blocs 31, 32 de fixation destinés à être assemblés par vissage au bâti de l'arracheuse-chargeuse non représentée.

La surface supérieure du carter 21 présente des flasques 33, 34, 35, 36, 37, 38, 39, 40 permettant le démontage par le haut des engrenages d'entraînement.

Ces engrenages d'entraînement sont prolongés vers le bas par les arbres d'entraînement de cages ou tambours rotatifs similaires ou fonctionnellement équivalents aux cages 22 à 28 décrits en référence à la figure 2.

Le moteur hydraulique 20 est alimenté de préférence par des orifices latéraux de raccordement hydraulique au circuit hydraulique de l'arracheuse-chargeuse non représentée.

Grâce à l'invention, il est possible de faire tourner dans le même sens plusieurs organes rotatifs, cages ou tambours pour exercer la même action d'accélération ou de nettoyage du flux de betteraves avec un seul moteur hydraulique en utilisant un train d'engrenages comportant des pignons intermédiaires régulièrement disposés entre deux engrenages successifs.

Selon une autre variante de l'invention, en utilisant un train d'engrenages comportant un nombre réduit de pignons et des couples d'engrenages successifs en prise directe, il est possible d'entraîner certains organes rotatifs, cages ou tambours, en sens alterné en utilisant un seul moteur d'entraînement.

L'invention permet, en répartissant de manière simple les organes rotatifs et leurs engrenages et en agissant ainsi sur leur sens de rotation, d'exercer des actions privilégiées d'accélération ou de nettoyage du flux de betteraves en fonction des conditions de récolte.

Selon une variante préférée, les moyens de commande de la rotation comportent non seulement des moyens d'inversion du sens de la rotation, mais également des moyens de variation de vitesse de rotation des dispositifs selon l'invention.

Grâce à cette variante préférée, il est possible de s'adapter aux variations des conditions de récolte, sans effectuer aucun réglage sur l'arracheuse-chargeuse à laquelle le dispositif est destiné.

Des essais ont montré une grande accélération du flux de betteraves ou tubercules lors de la récolte, et une amélioration importante du nettoyage des betteraves ou tubercules pour éliminer l'enveloppe indésirable des betteraves ou tubercules tout en protégeant la partie valorisable des betteraves ou tubercules.

Ainsi, grâce à l'invention, les projections et chocs importants subis par les betteraves ou tubercules projetés par le dispositif du document EP 1 086 168 A1 sont évités.

La disposition des dispositifs selon l'invention en périphérie d'une ou plusieurs turbines de nettoyage n'est pas limitative : l'invention s'applique également à tout autre circuit de transport et de nettoyage de betteraves ou tubercules présentant un flux de betteraves ou tubercules de trajectoire non circulaire.

L'invention décrite en référence à plusieurs modes de réalisation particuliers n'y est nullement limitée, mais couvre au contraire toute modification de forme ou toute variante de réalisation dans le cadre des revendications annexes.

## Revendications

1. Dispositif auxiliaire pour la récolte de betteraves ou autres tubercules, destiné à équiper notamment une arracheuse-chargeuse de betteraves ou autres tubercules, en étant monté à la périphérie d'une turbine de nettoyage, et apte à être entraîné en rotation par des moyens d'entraînement en rotation, **caractérisé par le fait que** le dispositif présente une conformation périphérique sensiblement en forme de secteur cylindrique, avec une pluralité d'organes rotatifs (10-12, 22-28) dont le contour extérieur vient en contact avec le flux de betteraves (1a-1h, 8) ou autres tubercules.

2. Dispositif selon la revendication 1, **caractérisé par le fait que** le dispositif est associé à des moyens de commande de la rotation de chaque organe rotatif (10-12, 22-28), de manière à commander l'entraînement en rotation dans un premier sens pour accélérer et nettoyer le flux de betteraves (1a-1h, 8) ou autres tubercules et de manière à commander l'entraînement en rotation en sens contraire du dit premier sens pour épurer, nettoyer et décrotter le flux de betteraves (1a-1h, 8) ou autres tubercules.

3. Dispositif selon la revendication 2, **caractérisé par le fait que** les moyens de commande de la rotation comportent des moyens de variation de vitesse de rotation.

4. Dispositif selon la revendication 1 ou la revendication 2, **caractérisé par le fait que** le dispositif comporte une pluralité d'organes rotatifs (10-12, 22-28) entraînés simultanément en rotation, dans un premier sens de rotation, ou en sens contraire audit premier sens de rotation.

5. Dispositif selon la revendication 1 ou la revendication 2, **caractérisé par le fait que** le dispositif comporte une pluralité d'organes rotatifs, dans laquelle certains organes rotatifs sont entraînés en sens contraire au sens de rotation des autres organes rotatifs, de manière à assurer à la fois une accélération du flux de betteraves (1a-1h, 8) ou autres tubercules, et une épuration, un nettoyage ou un décrottage des betteraves (1a-1h, 8) ou autres tubercules.

6. Dispositif selon l'une quelconque des revendications précédentes, **caractérisé par le fait que** les moyens d'entraînement en rotation sont des moyens mécaniques (21,33-40) disposés extérieurement au flux de betteraves (1a-1h, 8) ou autres tubercules.

7. Dispositif selon la revendication 6, **caractérisé par le fait que** le dispositif est monté à la périphérie d'une turbine (3-7) de nettoyage de l'arracheuse-chargeuse de betteraves ou autres tubercules à laquelle le dispositif est destiné.

8. Dispositif selon l'une quelconque des revendications précédentes, **caractérisé par le fait que** le dispositif comporte un moteur (20) hydraulique d'entraînement, destiné à être alimenté et commandé par une source de puissance hydraulique de l'arracheuse-chargeuse de betteraves ou autres tubercules à laquelle le dispositif est destiné.

9. Arracheuse-chargeuse de betteraves ou autres tubercules comportant un dispositif selon l'une quelconque des revendications précédentes.

10. Nettoyeuse-déterreuse de betteraves ou autres tubercules comportant un dispositif selon l'une quelconque des revendications 1 à 8.

## Claims

1. Auxiliary device for harvesting of beet or other root crops, which is designed in particular to equip a lifter-loader for beet or other root crops, whilst being fitted on the periphery of a cleaning turbine, and being able to be driven in rotation by means for driving in rotation, **characterised in that** the device has a peripheral form which is substantially in the form of a cylindrical section, with a plurality of rotary units (10-12, 22- 28), the outer contour of which comes into contact with the flow of beet (1a-1h, 8) or other root crops.

2. Device according to claim 1, **characterised in that** the device is associated with means for controlling the rotation of each rotary unit (10-12, 22-28) such as to command driving in rotation in a first direction, in order to accelerate and clean the flow of beet (1a-1h, 8) or other root crops, and such as to command the driving in rotation in the direction which is the opposite that of the said first direction, in order to scrub, clean and remove the mud from the flow of beet(1a-1h, 8) or other root crops.

3. Device according to claim 2, **characterised in that** the means for commanding the rotation comprise means for variation of the speed of rotation.

4. Device according to claim 1 or claim 2, **characterised in that** the device comprises a plurality of rotary units (10-12, 22-28) which are driven simultaneously in rotation in a first direction of rotation, or in the direction which is opposite that of the said first direction of rotation.

5. Device according to claim 1 or claim 2, **characterised in that** the device comprises a plurality of rotary units, wherein certain rotary units are driven in the direction which is opposite the direction of rotation of the other rotary units, such as to assure both acceleration of the flow of beet (1a-1h, 8) or other root crops, and scrubbing, cleaning or removal of the mud from the beet (1a-1h, 8) or other root crops.

6. Device according to any one of the preceding claims, **characterised in that** the means for driving in rotation are mechanical means (21, 33-40) which are disposed on the exterior of the flow of beet (1a-1h, 8) or other root crops.

7. Device according to claim 6, **characterised in that** the device is fitted on the periphery of a turbine (3-7) for cleaning of the lifter-loader for beet or other root crops for which the device is designed.

8. Device according to any one of the preceding claims, **characterised in that** the device comprising a hydraulic drive motor (20) which is designed to be supplied and controlled by a hydraulic power source of the lifter-loader for beet or other root crops for which the device is designed.

9. Lifter-loader for beet or other root crops, comprising a device according to any one of the preceding claims.

10. Cleaner - digging-up unit for beet or other root crops, comprising a device according to any one of claims 1 to 8.

## Patentansprüche

1. Zusatzvorrichtung für das Ernten von Rüben oder anderen Knollen, die insbesondere zum Ausrüsten einer Erntemaschine für Rüben oder andere Knollen dient, indem sie an der Peripherie einer Reinigungsturbine montiert ist, und die geeignet ist, durch Drehantriebsmittel gedreht zu werden, **dadurch gekennzeichnet, daß** die Vorrichtung eine periphere Gestaltung, die im wesentlichen die Form eines Zylindersektors aufweist, mit einer Vielzahl von Drehmitteln (10-12, 22-28) bereitstellt, deren Außenkontur in Kontakt kommt mit dem Fluß der Rüben (1a-1 h, 8) oder der anderen Knollen.

2. Vorrichtung nach Anspruch 1, **dadurch gekennzeichnet, daß** die Vorrichtung verbunden ist mit Mitteln zur Steuerung der Drehung jedes einzelnen Drehmittels (10-12, 22-28) in der Art, daß der Antrieb zum Drehen in einer ersten Richtung angesteuert wird, um den Fluß der Rüben (1a-1h, 8) oder anderen Knollen zu beschleunigen und zu reinigen, und in der Art, daß der Antrieb zum Drehen in entgegengesetzter Richtung zu der erstgenannten Richtung angesteuert wird, um den Fluß der Rüben (1a-1h, 8) oder der anderen Knollen zu säubern, reinigen und putzen.

3. Vorrichtung nach Anspruch 2, **dadurch gekennzeichnet, daß** die Mittel zur Steuerung der Drehung Mittel zur Variation der Drehgeschwindigkeit enthalten.

4. Vorrichtung nach Anspruch 1 oder Anspruch 2, **dadurch gekennzeichnet, daß** die Vorrichtung eine Mehrzahl von Drehmitteln (10-12, 22-28) aufweist, die gleichzeitig in Drehung in einer ersten Drehrichtung oder in einer entgegengesetzten Richtung zur ersten Drehrichtung versetzt sind.

5. Vorrichtung nach Anspruch 1 oder Anspruch 2, **dadurch gekennzeichnet, daß** die Vorrichtung eine Mehrzahl von Drehmitteln aufweist, von denen einige Drehmittel in einer Richtung entgegengesetzt der Drehrichtung der andern Drehmittel in der Art angetrieben sind, daß eine Beschleunigung des Flusses der Rüben (1a-1h, 8) oder der anderen Knollen und gleichzeitig ein Säubern, ein Reinigen oder ein Putzen der Rüben (1a-1h, 8) oder der anderen Knollen gesichert wird.

6. Vorrichtung nach einem der vorhergehenden Ansprüche, **dadurch gekennzeichnet, daß** die Drehantriebsmittel mechanische Mittel (21, 33-40) sind, die außerhalb des Flusses der Rüben (1a-1h, 8) oder der anderen Knollen angeordnet sind.

7. Vorrichtung nach Anspruch 6, **dadurch gekennzeichnet, daß** die Vorrichtung an der Peripherie eine Reinigungsturbine (3-7) der Erntemaschine für Rüben oder andere Knollen, für die die Vorrichtung bestimmt ist, befestigt ist.

8. Vorrichtung nach einem der vorhergehenden Ansprüche, **dadurch gekennzeichnet, daß** die Vorrichtung einen hydraulischen Antriebsmotor (20) umfaßt, der geeignet ist, von einer Hydrokraftquelle der Erntemaschine für Rüben oder andere Knollen, für die die Vorrichtung bestimmt ist, gespeist und gesteuert zu werden.

9. Erntemaschine für Rüben oder andere Knollen, mit einer Vorrichtung nach einem der obigen Ansprüche.

10. Reinigungsausgrabmaschine für Rüben oder andere Knollen, mit einer Vorrichtung nach einem der Ansprüche 1 bis 8.
